(19) Europäisches Patentamt
European Patent Office
Office européen des brevets

(11) Publication number: **0 412 832 A2**

(12) **EUROPEAN PATENT APPLICATION**

(21) Application number: **90308810.2**

(22) Date of filing: **10.08.90**

(51) Int. Cl.5: **C08F 255/04**, C08F 255/06, C08F 291/00, C08L 51/00, C08L 101/00

(30) Priority: **11.08.89 JP 206916/89**
**13.09.89 JP 235591/89**
**22.11.89 JP 301980/89**
**27.11.89 JP 304657/89**

(43) Date of publication of application:
**13.02.91 Bulletin 91/07**

(84) Designated Contracting States:
**DE FR GB IT**

(71) Applicant: **NIPPON PETROCHEMICALS COMPANY, LIMITED**
**3-1, Uchisaiwaicho 1-chome Chiyoda-ku**
**Tokyo(JP)**

(72) Inventor: **Aida, Fuyuki**
**1-30-3, Higashi-Mukojima**
**Sumida-ku, Tokyo(JP)**
Inventor: **Kobayashi, Masatoshi**
**8-11, Isogo, Isogo-ku**
**Yokohama-shi, Kanagawa-ken(JP)**
Inventor: **Yoshitomi, Hiroaki**
**3-35-3 Okubo, Konan-ku**
**Yokohama-shi, Kanagawa-ken(JP)**
Inventor: **Takakusaki, Toshimasa**
**3-6-21, Fujisaki, Kawasaki-ku**
**Kawasaki-shi, Kanagawa-ken(JP)**
Inventor: **Nagasawa, Noritoshi**
**17-25 Shinjonaka-machi, Nakahara-ku**
**Kawasaki-shi, Kanagawa-ken(JP)**

(74) Representative: **Cropp, John Anthony David et al**
**MATHYS & SQUIRE 10 Fleet Street**
**London, EC4Y 1AY(GB)**

(54) **Graft-modified substance, process for preparing same, and thermoplastic resin composition using the graft-modified substance.**

(57) A modified thermoplastic resin composition superior in adhesive property and mechanical strength is obtained by treating a thermoplastic resin (A) and/or a rubbery substance (B) with at least one kind of a monomer (D) containing at least one functional group selected from the following (D1) to (D6) in the presence of at least one compound as a modifying agent (C) selected from the following (C1) to (C4):

C1: a dihydroaromatic compound or a polymer thereof
C2: an ether compound
C3: a tetrahydroaromatic compound
C4: a cyclopentane compound
D1: carbonyl group
D2: cyclic iminoether group
D3: epoxy group
D4: hydroxyl group
D5: amino group
D6: nitrile group

EP 0 412 832 A2

# GRAFT-MODIFIED SUBSTANCE PROCESS FOR PREPARING SAME, AND THERMOPLASTIC RESIN COMPOSITION USING THE GRAFT-MODIFIED SUBSTANCE

## Field of the Invention

The present invention relates to a graft-modified substance, a modified thermoplastic resin composition containing the said modified substance, a process for preparing them, and a thermoplastic resin composition comprising the said modified substance or a thermoplastic resin composition containing the modified substance and an engineering plastic.

More particularly, the present invention is concerned with a graft-modified substance obtained by modifying a thermoplastic resin and/or a rubbery substance at a temperature not lower than the melting point(s) or softening point(s) thereof in the presence of, as a modifying agent, at least one compound selected from the group consisting of dihydroaromatic compounds, polymers thereof, ether compounds, tetrahydroaromatic compounds and cyclopentane compounds, a monomer (hereinafter referred to as "functional monomer") having a functional group such as carbonyl, cyclic iminoether, epoxy, hydroxyl, amino, or nitrile group, and, if necessary, a radical forming agent; as well as a modified thermoplastic resin composition prepared by incorporating the said modified substance in unmodified thermoplastic resin and/or rubbery substance, and a process for preparing them.

The present invention further concerns the use of the said modified substance or a modified thermoplastic resin composition containing the modified substance as a modifying agent or a compatibilizing agent for engineering plastics.

## Background of the Invention

A method of grafting a functional monomer to a thermoplastic resin has heretofore been known as a method for modifying the thermoplastic resin.

Particularly, compositions graft-modified using carboxylic acids or derivatives thereof, such as carboxylic acids, carboxylic esters, carboxylic acid amides, acid anhydrides or acid halides, monomers containing carbonyl groups or derivatives thereof, such as ketones, aldehydes, lactones or lactams, epoxy-containing monomers, hydroxyl-containing monomers, amino group-containing monomers, nitrile group-containing monomers, cyclic iminoether group-containing monomers, or derivatives thereof, are used as adhesives, impact improvers, compatibilizing agents, etc. because they are highly reactive.

Such modified thermoplastic resins are also superior in coating property and permit coating without under coat such as primer. They are useful as automobile parts such as bumper, household electric products and electronic products.

Generally, in the graft-modification using such functional monomer, organic peroxides have heretofore been used (see, for example, U.S. Patent Nos.4,147,740; 4,639,495; and 4,788,264). However, since organic peroxides are radical forming agents which are very high in activity, there occur various side reactions in addition to the desired graft reaction.

For example, in the case of using a peroxide degradation type resin such as polypropylene, there rapidly occurs thermal decomposition of the organic peroxide, with the result that a molecular cuting reaction is unavoidable and the composition obtained is high in fluidity. This composition is convenient for injection molding, but is poor in mechanical characteristics such as flexural modulus and yield tensile strength and also poor in adhesive property.

On the other hand, in the case of using a peroxide crosslinking type resin such as polyethylene, a crosslinking reaction will proceed to the extreme degree and marked deterioration of fluidity will result. As the case may be, there will occur gelation to the extent of processing being infeasible.

Besides, the remaining peroxide deteriorates the thermal stability and weathering resistance of the composition. Further, when the composition in question is subjected to extrusion, the anti-drawdown property will be deteriorated by a molecular cutting reaction, and molded products obtained by using this composition will have rough surfaces and be deficient in elongation due to a crosslinking reaction which takes place to the extreme degree. Also, there always occur such problems as low stability and safeness of a free radical forming agent during storage thereof and during modification, and thermal decomposition loss caused by the adhesion thereof to the inner walls of a heated, processing machine.

Thus, according to the method which employs only a peroxide for the purpose of modification, it is difficult to obtain a graft-modified substance superior in the balance of mechanical characteristics and

processability.

Thus, various methods have heretofore been tried for the graft-modification of thermoplastic resins, but none of them can afford a graft-modified substance fully satisfactory in adhesive property and mechanical strength in practical use. For this reason, a superior graft-modified substance has been desired.

## Objects of the Invention

In view of the above-mentioned points the present invention aims at remedying the drawbacks of the peroxide modification method which causes an excessive crosslinking reaction or a molecular cuting reaction, and providing a composition remarkably superior in moldability, without deterioration in mechanical strengths such as tensile strength and rigidity or in heat resistance, also markedly superior in the performance as an adhesive, an impact improver, or a compatibilizing agent, and further superior in coating property, in comparison with the conventional peroxide modification method. This composition contains a modified substance obtained by modifying a thermoplastic resin and/or a rubbery substance in the presence of a functional monomer, using, as a modifying agent which causes a mild modification reaction, a dihydroaromatic compound or a polymer thereof, an ether compound, a tetrahydroaromatic compound, or a cyclopentane compound, and, if necessary, a radical forming agent in a small amount to the extent of not impairing mechanical characteristics and processability.

It is another object of the present invention to provide a thermoplastic resin composition comprising at least one kind of an engineering plastic and the above modified substance, and capable of improving the impact resistance of the engineering plastic(s), accelerating the compatibilization of the engineering plastics used with each other, and exhibiting mutual characteristics.

## Summary of the Invention

Having made extensive studies for achieving the above-mentioned objects, the present inventors accomplished the present invention.

The present invention resides in a modified thermoplastic resin composition comprising a graft-modified substance prepared by treating (A) a thermoplastic resin and/or (B) a rubbery substance with (D) at least one monomer containing any of the following functional groups (D1) to (D6) in the presence of (C) a modifying agent which is at least one compound selected from the following (C1) to (C4):

C1 : a dihydroaromatic compound or a polymer thereof
C2 : an ether compound
C3 : a tetrahydroaromatic compound
C4 : a cyclopentane compound
D1 : carbonyl group
D2 : cyclic iminoether group
D3 : epoxy group
D4 : hydroxyl group
D5 : amino group
D6 : nitrile group

In another aspect the present invention resides in a thermoplastic resin composition comprising 100 parts by weight of at least one kind of an engineering plastic and 1-100 parts by weight of the above modified thermoplastic resin composition.

## Detailed Description of the Invention

The present invention will be described in detail hereinunder.

Examples of the thermoplastic resin used as component (A) in the present invention include polyolefin resins such as α-olefin (co)polymers having 2 to 12 carbon atoms, e.g. high- and medium-density polyethylenes, high pressure process low-density polyethylenes, linear low-density polyethylenes, very-low density polyethylenes, polypropylene, poly-1-butene, and poly-4-methyl-1-pentene, intercopolymers of α-olefins such as ethylene, propylene, 1-butene, 1-hexene and 4-methyl-1-pentene, and copolymers of ethylene and polar group-containing monomers, e.g. ethylene-unsaturated carboxylate copolymers and ethylene-carboxylic acid unsaturated ester copolymers; as well as polystyrene resins, polyacrylonitrile

resins, polymethacrylate resins, polyacetal resins, polyamide resins, polyester resins, polycarbonate resins, polyether resins, polysulfide resins, and polysulfone resins. These resins may be used each alone or as mixtures.

Particularly, in point of inexpensiveness and good balance of mechanical strength, etc., polystyrene resins and polyolefin resins, above all, ethylene (co)polymers and/or polypropylene resins, are most preferred.

Examples of the rubbery substance used as component (B) in the present invention include ethylene-α-olefin random copolymer rubbers typified by ethylene-propylene random copolymer ruber, as well as ethylene-propylene-diene random copolymer rubber, styrene-butadiene-styrene block copolymer rubber, styrene-isoprene-styrene block copolymer rubber, 1,2-polybutadiene rubber, natural rubber, isoprene rubber, butadiene rubber, chloroprene rubber, styrene-butadiene rubber, nitrile rubber, and polyisobutylene rubber.

Particularly, ethylene-propylene random copolymer rubber and ethylene-propylene-diene random copolymer rubber are preferred. These two rubbers, as compared with the other rubbery substances, are superior in thermoplasticity and can be easily dispersed by melt-kneading. Further, in comparison with SBR, isoprene rubber, nitrile rubber and butadiene rubber, they do not have any peculiar offensive odor and are easy to weigh and handle in mixing because they are available as pellets. Besides, the two rubbers in question have a high degree of freedom in selecting a desired type of a composition preparing apparatus, thus having advantages in operations.

As to the diene component in the above ethylene-propylene-diene random copolymer rubber, it may be any of ethylidene norbornene, dicyclopentadiene and 1,4-cyclohexadiene.

The rubbery substances exemplified above preferably range in Mooney viscosity from $ML_{1+4}$ = 10 to 100, more preferably $ML_{1+4}$ = 20 to 90. And they may be used each alone or as mixtures of two or more thereof.

The dihydroaromatic compound (C) used as a modifying agent in the present invention is a compound containing one or more aromatic rings, of which at least one aromatic ring is dihydrogenated. The aromatic ring as referred to herein indicates a ring structure in which the number of π-electrons shown in the definition of aromaticity (see, for example, "Yuki Kagaku-No Kiso, "Tokyo Kagaku Dojin K.K., translated by Toshio Goto, (1974), pp. 105-106) [Richard S. Mon-son & John C. Shelton, "Fundamentals of Organic Chemistry, "MacGraw-Hill, Inc. (1974)] is 4n + 2 (n is an integer). For example, pyridine and quinoline are included. Therefore, examples of the dihydroaromatic series compound used in the present invention include dihydro derivatives of quinoline. Further, the dihydroaromatic series compound used in the present invention may contain a substituent group. Alkyl substituted compounds as well as derivatives substituted with various elements or functional groups are employable. The dihydroaromatic series compounds employable in the present invention can be prepared by the application of known chemical reactions. Examples of such dihydroaromatic series compounds now available include 1,2-dihydrobenzene, cis-1,2-dihydrocatechol, 1,2-dihydronaphthalene, 9,10-dihydrophenanthrene, as well as 1,2-dihydroquinoline compounds such as 6-decyl-2,2,4-trimethyl-1,2-dihydroquinoline, 6-ethoxy-2,2,4-trimethyl-1,2-dihydroquinoline, and 2,2,4-trimethyl-1,2-dihydroquinoline. Polymers of these compounds are also employable.

Among the dihydroaromatic compounds employable in the present invention there are included those heretofore known as antioxidant agents. However, the prior art does not suggest the feature of the present invention that the dihydroaromatic compounds and the polymers induce radicals or a mild modification reaction is performed by the use of said dihydroaromatic series compound and a) functional monomer.

The ether compound (C2) used as a modifying agent in the present invention may be straight-chained or cyclic and may contain a substituent group. Examples are cyclic ethers such as 1,3-dioxolan and 1,4-dioxane; straight-chain ethers such as ethyl ether and isopropyl ether; non-aromatic cyclic vinyl ethers typified by 3,4-dihydro-2-pyran and 4H-chromene; furan derivatives typified by furfuryl alcohol, furfuryl aldehyde, benzofuran and furfuryl acetate; straight-chain vinyl ether compounds typified by n-octadecyl vinyl ether and ethyl vinyl ether; and enol ethers and esters of carbonyl compounds such as ketones, esters, lactones, aldehydes, amides and lactams typified by ketone acetal, isopropenyl acetate, vinyl acetate and 1-amino-1-methoxyethylene. These compounds may contain substituent groups. Alkyl substituted compounds and derivatives substituted with various elements and functional groups are also employable. Further, these compounds may be used each alone or as mixtures. Particularly, vinyl and alkenyl ethers are preferred.

The tetrahydroaromatic series compound (C3) used as a modifying agent in the present invention is a compound in which at least one aromatic ring is tetrahydrogenated. The "aromatic ring" as referred to herein is of the same definition as that of aromaticity mentioned previously. For example, furan, benzene and naphthalene are included. Thus, examples of the tetrahydroaromatic compound used in the present

invention include tetrahydro derivatives of naphthalene. Further, the tetrahydroaromatic compound used in the present invention may contain a substituent group. Alkyl substituted compounds as well as derivatives substituted with various elements or functional groups are also employable. The tetrahydroaromatic compounds employable in the present invention can be prepared by the application of known chemical reactions. Examples of those now available include 1,2,3,4-tetrahydronaphthalene, tetrahydrobenzene and tetrahydrofuran. Polymers of these compounds are also employable.

The cyclopentane compound (C4) used as a modifying agent in the present invention indicates a compound which includes at least one cyclopentane, cyclopentene or cyclopentadiene skeleton. More specifically, it is a five-membered compound the ring of which is constituted by only carbon atoms. Examples include cyclopentane, cyclopentene, cyclopentadiene, dicyclopentadiene, indene, indance, and fluorene. These compounds may contain substituent groups. Alkyl substituted compounds as well as substituted derivatives using various elements and functional groups are also employable. These compounds may be used each alone or as mixtures.

In connection with the functional group-containing monomer used as component (D) in the present invention, the carbonyl group-containing monomer D1 indicates a monomer containing carbonyl group or a derivative thereof, such as a carboxylic acid or a derivative thereof, e.g. carboxylic acid, carboxylic ester, carboxylic acid amide, acid halide, or a derivative thereof, ketone, aldehyde, lactone, or lactam.

Examples of such monomer D1 are ketones, aldehydes, lactones and lactams typified by α, β-unsaturated ketones such as methyl vinyl ketone, α,β-unsaturated aldehydes such as acrolein, α,β-unsaturated lactone derivatives such as δ or γ-valero lactone and γ-buteno lactone and α,β-unsaturated lactam derivatives such as δ- or γ-valerolactam and δ-buteno lactam.

Examples of carboxylic acids and derivatives thereof include α,β-unsaturated dicarboxylic acids such as maleic acid, fumaric acid, citraconic acid, itaconic acid, 5-norbornene-2,3-dicarboxylic acid and 1,2,3,6-tetrahydrophthalic acid, unsaturated monocarboxylic acid such as acrylic acid, methacrylic acid, crotonic acid, butenoic acid and pentenoic acid, as well as esters and amides thereof; further, in the case of dicarboxylic acids, anhydrides, half esters and metallic salts thereof.

The cyclic iminoether group-containing monomer D2 indicates an alkenyl cyclic iminoether represented by the following structural formula or a derivative thereof:

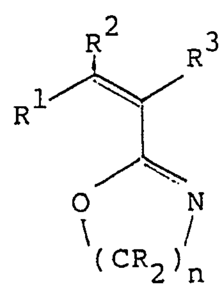

wherein n is 1, 2 or 3 preferably 2 or 3, more preferably 2;

$R^1$, $R^2$, $R^3$ and R each represent an inert alkyl group of $C_1$ to $C_{12}$ and/or hydrogen, which alkyl group may contain an inert substituent group. The "inert" as referred to herein means exerting no bad influence on the graft reaction and the function of the resulting product. It is not necessary for all of Rs to be the same. Preferably, $R^1$ = $R^2$ = H, $R^3$ = H or Me, R = H, i.e 2-vinyl or 2-isopropenyl-2-oxazoline, 2-vinyl or 2-isopropenyl-5,6-dihydro-4H-1,3-oxazine. These may be used each alone or as a mixture. Particularly, 2-vinyl and 2-isopropenyl-2-oxazolines are preferred.

As examples of the epoxy group-containing monomer D3 there are mentioned glycidyl (meth)acrylate, butadienen oxide and isoprene oxide.

As examples of the hydroxyl group-containing monomer D4 there are mentioned 1-hydroxypropyl (meth)acrylate, 2-hydroxypropyl (meth)acrylate and hydroxyethyl (meth)acrylate.

As an example of the amino group-containing monomer D5 there is mentioned aminoethyl (meth)-acrylate.

As an example of the nitrile group-containing monomer there is mentioned acrylonitrile.

The above functional monomers may be straight -chain or cyclic, or may contain substituent groups which do not interfere with the graft reaction, or may be used as a mixture of such functional monomers which do not interfere with the graft reaction. Derivatives thereof are also employable.

When the above functional monomer is graft-modified, another unsaturated monomer may be added. As examples of such unsaturated monomer there are mentioned olefins such as propylene, 1-butene, 1-hexene, 1-decene,1-octene and styrene, vinyl esters such as vinyl acetate, vinyl propionate and vinyl benzoate, vinyl chloride and vinyl ethers such as vinyl methyl ether and vinyl ethyl ether.

The functional monomer (D) is used together with at least one modifying agent selected from (C1) to (C4), whereby the graft reaction is performed, making it possible to impart adhesive property and reactivity to the resulting modified substance. This modified substance or a composition which contains the modified substance is suitable for use as an impact improver or a compatibilizing agent.

Above all, unsaturated (di)carboxylic acids typified by maleic anhydride are prefered because they exhibit high graft-reactivity when used together with the modifying agent (C).

Also, alkenyl cyclic iminoethers and derivatives thereof are highly reactive with various functional groups, superior in adhesive property and very effective as adhesives or compatibilizing agents, so are preferred.

In preparing the above modified substance in the present invention there may be used a small amount of a radical forming agent (E), which may be a conventional one, e.g. organic peroxide, azonitrile, oxygen, or ozone.

Examples of organic peroxides include alkyl peroxides, aryl peroxides, acyl peroxides, aroyl peroxides, ketone peroxides, peroxycarbonates and peroxycarboxylates. As examples of alkyl peroxides there are mentioned diisopropyl peroxide, di-tert-butyl peroxide, tet-butyl hydroperoxide, and $\alpha,\alpha'$-bis-(tert-butyl peroxyisopropyl)-benzene. As examples of aryl peroxides there are mentioned dicumyl peroxide and cumyl hydroperoxide. As an examples of acyl peroxides there is mentioned lauroyl peroxide. An example of aroyl peroxide is dibenzoyl peroxide. Examples of ketone peroxides are methylketone peroxide and cyclohexanone peroxide. Examples of azonitriles are azobisisobutyronitrile and azobisisopropionitrile. These organic peroxides may be used each alone or as mixtures. The function as an adhesive or a compatibilizing agent is improved remarkably by using an appropriate amount of the radical forming agent (E).

In the present invention, moreover, carbonates or oxides of Group Ia or IIa metals in the Periodic Table may be used during and/or after the modification. As examples of such carbonates and oxides there are mentioned sodium carbonate, potassium carbonate, lithium carbonate, magnesium carbonate, calcium carbonate, calcium oxide, sodium oxide, potassium oxide, magnesium oxide, and lithium oxide.

Further, if necessary, polyfunctional monomers may be used, thereby allowing crosslinking to take place simultaneously with the modification to enhance the mechanical strength and improve the heat resistance. Examples of such polyfunctional monomers include methacrylic esters typified by trimethylolpropane trimethacrylate and ethylene glycol dimethacrylate, vinyl monomers typified by divinylbenzene, triallyl isocyanurate and diallyl phthalate, and bismaleimides typified by N,N'-m-phenylenebismaleimide and N,N'-ethylenebismaleimide. These monomers may be used each alone or as mixtures. Particularly, bismaleimides are preferred because they not only enhance the crosslinking reactivity but also are useful in imparting adhesive properties to the modified substance.

The modification reaction may be carried out at a temperature in the range of not lower than the melting point or the softening point of the resin and not higher than the decomposition point thereof, by melt kneading, e.g. dynamic heat treatment, or in a solvent.

In melt kneading, it is desirable to use a mixing machine which affords a high shear rate in order to facilitate the formation of radical in the mixture.

The graft-modified substance of the present invention can satisfy a wide range of physical properties required, including the physical properties of the rubbery substance (B), by selecting a suitable blending ratio of the thermoplastic resin (A) and the rubbery substance (B), for example, in the range of 100 ~ 0/0 ~ 100, preferably 95 ~ 5/5 ~ 95, more preferably 90 ~ 10/10 ~ 90.

The amount of the modifying agent used as component (C) in the present invention is in the range of 0.001 to 8, preferably 0.01 to 5, parts by weight based on 100 parts by weight of the thermoplastic resin and/or the rubbery substance. If it is less than 0.001 part by weight, the modification reaction will not proceed to a satisfactory extent, and an amount thereof exceeding 8 parts by weight will cause coloration of the resin and/or the rubbery substance or cause the increase of cost.

The amount of the functional monomer (D) is selected in the range of 0.01 to 30 parts by weight based on 100 parts by weight of the thermoplastic resin and/or the rubbery substance. If it is less than 0.01 part by weight, the effect obtained will be poor in adhesive property and reactivity, and even if the said amount exceeds 30 parts by weight, the adhesive property will not be improved to any further extent; besides, the reactivity will be improved to the extreme degree, resulting in that there arises a fear of hardening or coloration of the resin.

The amount of the radical forming agent (E) is not larger than 5 parts by weight based on 100 parts by weight of the thermoplastic resin and/or the rubbery substance. If it exceeds 5 parts by weight, not only the modification reaction but also a molecular cutting reaction of the resin but also an excessive crosslinking

reaction will proceed, thus causing deterioration of fluidity or of mechanical characteristics.

In the present invention, a softening agent may be used during and/or after the heat treatment. Examples of employable softening agents include such petroleum distillates as paraffinic, naphthenic and aromatic oils, as well as synthetic oils, e.g. liquid polyisobutene.

The amount of the softening agent differs, depending on the object, use, etc., but usually it is up to 100 parts by weight based on 100 parts by weight of the resin and/or the rubber component.

In the present invention, moreover, the foregoing unmodified thermoplastic resin component (A) and/or rubbery substance component (B) may be incorporated in the graft-modified substance described above to obtain a modified thermoplastic resin composition.

In the case where the said modified thermoplastic resin composition is to be used as an adhesive, it is desirable that the concentration of the functional monomer (D) in the composition be adjusted to fall under the range of 0.001 to 20 wt% relative to the thermoplastic resin component and/or the rubbery substance component. If this concentration is lower than 0.001 wt%, the adhesive strength will not be satisfactory, and if it exceeds 20 wt%, the adhesive property will not be improved any further and there will arise a fear of coloration of the resin.

The modified substance or the modified thermoplastic resin composition thus prepared according to the present invention contains a highly reactive functional group, so is effective as an impact improver for engineering plastics or as a compatibilizing agent for different kinds of engineering plastics.

In the present invention there may be used at least one engineering plastic selected from ultra-high molecular weight polyethylenes, polypropylenes, poly-1-butene, poly-4-methyl-1-pentene, polystyrene resins such as polystyrene, styrene/acrylonitrile copolymer, styrene/methyl methacrylate/acrylonitrile copolymer, α- methylstyrene/styrene/acrylonitrile copolymer, ABS (acrylonitrile/butadiene/styrene copolymer),MBS (methyl methacrylate/butadiene/styrene copolymer), AES (acrylonitrile/EPR/styrene copolymer), and AAS (acryl rubber/acrylonitrile/styrene copolymer), polymethacrylate resins, polyacetal resins, polyamide resins, polycarbonate resins, polyphenylene ether resins, polyester resins, liquid crystal polyester resins, polysulfone resins, polyether sulfone resins, polyphenylene sulfide resins, polyether-ether ketones, polyacrylate resins, polyamide-imide resins, polyimide resins, polyetherimide, polyesteramide, polyetheresteramide, polyetherketoneketone, polyaryletherketone, polyetherketone, and fluoro resins.

As combination alloys of such engineering plastics there are mentioned PA/PPO, PBT/PPO, ABS/PA, ABS/PBT, ABS/PPO, ABS/PC, PBT/PC, PPS/PPO, PPS/PA, and PS/PPO, wherein PA: polyamide, PPO: polyphenylene oxide, PBT: polybutylene terephthalate, ABS: acrylonitrile/butadiene/styrene copolymer, PC: polycarbonate, PPS: polyphenylene sulfide, PS: polysulfone. The graft-modified substance or the modified thermoplastic resin composition of the present invention exhibits an outstanding effect as a compatibilizing agent for these engineering plastics.

In the above various polymer alloys, by selecting a suitable functional group in the graft-modified substance or the modified thermoplastic resin composition it is made possible to provide a thermoplastic resin composition having the merits of the two without phase separation of different kinds of incompatible engineering plastics.

In the modified substance or the modified thermoplastic resin composition of the present invention or compositions using them there may be incorporated, as necessary, stabilizer, antioxidant, ultraviolet ray absorber, lubricant, foaming agent, antistatic agent, flame retardant, filler, plasticizer, dye, and pigment.

These additives may be organic or inorganic compounds and may be in any of such shapes as powdery, flake-like, needle-like, spherical, hollow and fibrous shapes.

As examples of such additives there are mentioned stabilizers typified by hindered phenolic compounds, benzotriazole compounds, hindered amine compounds and amide compounds; such inorganic flame retardants as magnesium hydroxide and aluminum hydroxide; such inorganic fillers as calcium carbonate, magnesium carbonate, calcium sulfate, calcium silicate, clay, diatomaceous earth, talc, alumina, glass powder, iron oxide, metal powder, graphite, silicon carbide, silicon nitride, silica, boron nitride, aluminum nitride, carbon black, mica, glass plate, sericite, pyrophyllite, aluminum flake, graphite, Shirasu balloon, metal balloon, pumice, glass fibers, carbon fibers, graphite fibers, whisker, metal fibers, silicon carbide fibers, asbestos, and wollastonite; dyes such as azo dyes and indigo dyes; and such pigment as red iron oxide.

In the case of using the inorganic compounds exemplified above, they may be surface-treated in advance with a silane coupling agent, an organic titanate coupling agent, or a metallic salt of a fatty acid.

The modified substance or the modified thermoplastic resin composition, which has been modified with an unsaturated carboxylic acid or a derivative thereof according to the present invention, has a polar group, so compounding ingredients such as inorganic fillers can be incorporated therein a large amount.

These filler components may be added any time, but preferably are added at the time of melt kneading.

The graft-modified substance or the modified thermoplastic resin composition of the present invention is superior in coating property, but in order to further improve this effect, a high-energy light ray such as ultraviolet ray or plasma may be radiated thereto.

The graft-modified substance or the modified thermoplastic resin composition of the present invention, as described above, is prepared by grafting a functional monomer to a thermoplastic resin or a rubbery substance in the presence of, as a modifying agent, a dihydroaromatic compound or a polymer thereof, an ether compound, a tetrahydroaromatic compound, or a cyclopentane compound, and a radical forming agent if necessary. By this preparation, the adhesive property and reactivity can be improved to a remarkable extent while retaining the excellent mechanical strength, thermal properties and moldability of the resin itself. The graft-modified substance and the modified thermoplastic resin composition are extremely superior in the properties as an impact improver or a compatibilizing agent. Besides, the coating property can be improved remarkably.

Since the modified substance and the modified thermoplastic resin composition containing the modified substance according to the present invention are superior in adhesive characteristics, they can be used as resin materials in coating, printing and in other uses requiring adhesion. Further, engineering plastics using such modified substance or the modified thermoplastic resin composition have superior characteristics and so can be utilized, for example, as panels, packaging materials, furniture and household utensils in various fields, including the fields of fibers, electric and electronic products, automobiles, ships, aircraft, architecture and civil engineering. And they can be formed into desired shaped by any of the known plastic molding methods, including injection molding, extrusion and compression molding. More particularly, the modified substance and the modified thermoplastic resin composition containing the modified substance are employable as:

(1) Automobile parts such as rear finisher, sill, rear coater panel, engine hood, trunk lid, fender, door panel, protector, bumper fascia, energy absorber, air spoiler, side molding, weather strip, shock absorber, dust boots, vacuum connector, rack and pinion boots, instrument panel, arm rest, door liner, seat back, duct cover, and mud guard.

(2) Household electric parts such as interior and exterior parts of coolers and refrigerators.

(3) Housing materials such as roof panels and heat insulating walls

(4) Things of daily necessity and furniture such as dining table and desk surfaces, furniture panels, kitchen cabinets, and ice box.

(5) Freezer parts such as interior parts of refrigerator trucks and refrigerator walls.

(6) Others.

The modified substance and the modified thermoplastic resin composition in question are also utilized as resin composition or master batches for extrusion or injection molding into sheets or films.

It is also possible to obtain a strongly bonded laminate structure by laminating the modified substance or the modified thermoplastic resin composition, as an adhesive resin in a molten state, to another material (e.g. metal, inorganic material, or plastic).

[Examples and Comparative Examples]

The present invention will be described below concretely in terms of working examples, but it is to be understood that the invention is not limited thereto.

Examples 1 - 6 and Comparative Examples 1 - 7

Thermoplastic resin (A), rubbery substance (B), modifying agent (C), functional monomer (D) and radical forming agent (E) were melt-kneaded in such proportions as shown in Table 1 and then evaluated, the results of which are as set forth in the same table. Test pieces were produced by injection-molding each of the resulting compositions and then annealing the thus-molded product, unless otherwise described.

Preparation of the compositions, conditions for the production of test pieces by injection molding, and testing methods are as follows.

Preparation of the Compositions

1) Thermoplastic resin (A) and/or rubbery substance (B), modifying agent (C), functional monomer (D),

and, if desired, radical forming agent (E), were mixed together in the tabulated proportions by means of a Henschel mixer.

2) The mixtures prepared above were each melt-kneaded at a resin temperature of 180 °C to 260 °C and at a revolution of 200 rpm, using a continuous twin-screw extruder (30 mm dia., a product of Plastic Kogaku Kenkyu-Sho K.K.). Then, the melt-kneaded products were pelletized. In the kneading operation, unreacted monomer was removed completely through a vent (-700 mmHg). Where the pouring of a softening agent was required, it was added using a reciprocating fixed-displacement pump connected to a vent hole.

| Conditions for Injection Molding | |
|---|---|
| Molding machine : | IS-90B (a product of Toshiba Machine Co., Ltd.) |
| Injection pressure : | 1,000 kg/cm$^2$ |
| Molding temperature : | 180 °C - 260 °C |
| Mold temperature : | 50 °C |

## Testing and Measuring Methods

1. Melt Flow Rate (MFR)

Determined according to JIS K-6760 and 6758.

2. Flexural Modulus

Determined according to ASTM D-790.

3. Izod Impact Strength

Determined according to JIS K-6758.

4. Evaluation of Coating

A flat plate obtained by using an injection molding machine was subjected to 1,1,1-trichloroethane vapor washing for one minute, onto which was then applied only a top coating material of one-can urethane to give a film thickness of 35 µm, followed by drying at 120 °C for 30 minutes and subsequent standing at room temperature for 24 hours to obtain a coated test piece. In the coating of the test piece were formed 100 squares each 1 mm long by 1 mm wide by means of a cutter, on which was then stuck a cellophane tape. Thereafter, the cellophane tape was peeled off quickly and the percentage of the remaining squares was determined to evaluate the adhesion of the coating.

Also, the coating peeling strength is an important factor in practical use, so for a coating peeling strength test there was prepared a coated test piece in the same manner as above except that the film thickness was set at 100 µm. From this test piece was cut out a 10 mm wide, paper strip-like piece with a cutter. Then, a part of the test piece thus obtained was peeled off forcibly from one end thereof, and the coating thereon was peeled off using a tensile tester under the conditions of pulling rate 50 mm/min, peeling angle 180° and room temperature (23 °C), to determine a coating peeling strength (g/10 mm).

5. Flow Mark

A sample was injected into a mold having a size of 100 mm x 200 mm x 3 mm under the following molding conditions and then the molded product was evaluated by eye.

| Conditions for Injection Molding | |
|---|---|
| Molding machine :<br>Injection pressure :<br>Molding temperature :<br>Mold temperature : | IS-90B (a product of Toshiba Machine Co., Ltd.)<br>1,000 $kg/cm^2$<br>180 ° C - 260 ° C<br>50 ° C |

The visual evaluation was made in four stages of ⊚, o, Δ, x from the best to the worst.

Examples 7 - 11 and Comparative Examples 8 - 12

Thermoplastic resin (A), rubbery substance (B), functional monomer (D2) (a cyclic iminoether derivative), modifying agent (C), and, if desired, radical forming agent (E), were melt-kneaded. Test pieces were produced by pressing each of the resulting compositions into a 2 mm thick plate at 230 ° C, then annealing the plate and punching the plate to obtain a desired test piece, unless otherwise described. As to Examples 10, 11 and Comparative Examples 11, 12, the evaluation of flow mark was also conducted.

How to prepare the compositions and testing methods are as described above.

Examples 12 - 15 and Comparative Examples 13 - 16

Low-density polyethylene (A5), each of the oxazoline-modified thermoplastic resins prepared in Examples 7, 8 and 9 the maleic anhydride-modified thermoplastic resin prepared in Example 6 were dry-blended in the proportions shown in Table 3, and the resulting compositions were each melt-kneaded by means of a twin-screw extruder to obtain pellets. The pellets were then formed into film having a thickness of about 80 μm. This film was sandwiched in between a polypropylene sheet (A2) about 1 mm thick and a sheet of polyester (A7) or ethylene-vinyl alcohol copolymer (A8), also about 1 mm thick, followed by fusion bonding under heating at 230 ° C for 20 seconds, using a pressing machine to obtain a laminate of three-layer films. The polypropylene sheet and various polymer sheets were peeled off in 180 ° C direction and determined for strength. The peeling speed was 50 mm/min. In the comparative examples there were used unmodified polymers.

Examples 16 - 19 and Comparative Examples 17 - 20

Thermoplastic resin (A), rubbery substance (B), modifiying agent (C) and polyfunctional monomer (D) were melt-kneaded in the proportions shown in Table 4. The resulting pellets were pressed into plate. The results of coating evaluation conducted on the plate are as set forth in the same table.

Examples 20 - 24 and Comparative Examples 21 - 25

100 parts by weight of low-density polyethylene (A5) was blended with 1 part by weight of dihydropyran (C2) as a modifying agent and 3 parts by weight of maleic anhydride (D1) were mixed together and melt-kneaded using the foregoing twin-screw extruder to afford a maleic acid-modified low-density polyethylene (Man-LDPE).

Also, 100 parts by weight of very-low density polyethylene (A4), 1 part by weight of dihydropyran (C2) as a modifying agent and 3 parts by weight of glycidyl methacrylate (D3) were mixed together and melt-kneaded using the foregoing twin-screw extruder to give a diglycidyl methacrylate-modified very-low density polyethylene (GMA-VLDPE).

Using the modified products prepared above, the improvement in impact resistance and compatibility of engineering plastics were evaluated as follows, the results of which are as shown in Table 5.
Charpy impact test ..... according to JIS K-7111.

The component (A), (B), (C) and (D) used in the working examples of the present invention and the comparative examples are as follows:

(A) Thermoplastic Resin

A1 : Polypropylene (PP)
(trade name: Nisseki Polypro J880G, MFR = 40, a product of Nippon Petrochemicals Co., Ltd.)
A2 : Polypropylene (PP)
(trade name: Nisseki Polypro J650G, MFR = 8.0, a product of Nippon Petrochemicals Co., Ltd.)
A3: Polypropylene (PP)
(trade name: Nisseki Polypro J420G, MFR = 1.5, a product of Nippon Petrochemicals Co., Ltd.)
A4: Very-low density polyethylene (VLDPE)
(trade name: Nisseki Softrex D9550, MFR = 5.0, density = 0.907 $g/cm^3$, a product of Nippon Petrochemicals Co., Ltd.)
A5: Low-density polyethylene (LDPE)
(trade name: Nisseki Rexlon F22, MFR = 1.0, density = 0.924$g/cm^3$, a product of Nippon Petrochemicals Co., Ltd.)
A6: Polystyrene (PSt)
(trade name: Toporex 525, a product of Mitsui Toatsu Chemicals, Inc.)
A7: Polybutylene terephthalate (PBT)
(trade name: Valox 310, a product of Engineering Plastic K.K.)
A8: Ethylene-vinyl alcohol copolymer EVOH)
(trade name: Oval EP-F101, a product of Kuraray Co., Ltd.)
A9: Polyphenylene oxide (PPO)
(trade name: Novil 534J-801, a product of EPL K.K.)
A10: Ethylene-ethyl acrylate copolymer (EEA)
(trade name: Nisseki Rexlon EEA, A5240, a product of Nippon Petrochemicals Co., Ltd.)
A11: Polyamide (PA)
(trade name: Nylon-6, a product of Ube Industries, Ltd.)
A12: Polyethylene terephthalate (PET)
(trade name: MA-523-X, a product of Mitsubishi Rayon Company Limited)
A13: Polycarbonate (PC)
(trade name: Novalex 7025A, a product of Mitsubishi Chemical Industries Ltd.)

(B) Rubbery Substance

B1: Ethylene-propylene-diene random copolymer rubber (EPDM)
(trade name:EP57P, iodine value 15, $ML_{1+4}$ = 88, a product of Japan Synthetic Rubber Co., Ltd.)
B2: Ethylene-propylene random copolymer (EPR)
(trade name: EP07P, $ML_{1+4}$ = 70, a product of Japan Synthetic Rubber Co., Ltd.)

(C) Modifying Agent

(C1) Dihydroaromatic Compound
C1-1: Poly(2,2,4-trimethyl-1,2-dihydroquinoline)
(trade name: Nocrac 224S, a product of Ohuchi Shinko Kagaku K.K.)
C1-2: 9,10-Dihydrophenanthrene
(a product of Tokyo Kasei K.K.)
(C2) Ether Compound
C2-1: Dihydropyran
(a product of Tokyo Kasei K.K.)
C2-2: Isopropenyl acetate
(a product of Tokyo Kasei K.K.)
(C3) Tetrahydroaromatic Compound
C3-1: 1,2,3,4-Tetrahydronaphthalene
(a product of Tokyo Kasei K.K.)
C3-2: Tetrahydrobenzene
(a product of Tokyo Kasei K.K.)
C3-3: Tetrahydrofuran
(a product of Tokyo Kasei K.K.)
(C4) Cyclopentane Compound

$C_4$: Indene
(a product of Tokyo Kasei K.K.)

(D) Functional Monomer

D1: Maleic anhydride
(trade name: crystalman, a product of Asahi Sekiyu Kagaku K.K.)
D2-1: 2-Isopropenyl-2-oxazoline
D2-2: 2-Vinyl-2-oxazoline
D3: Glycidyl methacrylate
D4: Hydroxyethyl acrylate
D5: Aminoethyl acrylate
D6: Acrylonitrile

(E) Radical Forming Agent

$\alpha,\alpha'$-Bis-(tert-butylperoxyisopropyl)-benzene
(Others)
Softening Agent: Super oil C, a product of Nippon Oil Co., Ltd.
Filler : TALC FFR, a product of Asada Seifun K.K.)

Table 1

| Starting Resin | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|
| PP(A1) | wt% | 55 | 63 | - | 40 | - | 40 | 55 | 63 | - | - | 40 | - | 40 |
| PP(A2) | wt% | - | - | 40 | - | - | - | - | - | 40 | 40 | - | - | - |
| VLDPE(A4) | wt% | - | - | 30 | 60 | - | - | - | - | 30 | 30 | 60 | - | - |
| PBT(A7) | wt% | - | - | - | - | 100 | - | - | - | - | - | - | 100 | - |
| EPR(B1) | wt% | 45 | - | - | - | - | - | 45 | - | - | - | - | - | - |
| EPDM(B2) | wt% | - | 27 | 30 | - | - | 60 | - | 27 | 30 | 30 | - | - | 60 |
| Talc | wt% | - | 10 | - | - | - | - | - | 10 | - | - | - | - | - |
| Modifying Agenti(C) | Kind | c1-1 | c2-1 | c2-2 | c1-2 | c3-1 | c4 | - | - | - | c2-2 | - | c3-1 | c4 |
| | Amount, part by wt. | 1.2 | 0.4 | 0.4 | 1.2 | 0.4 | 1.2 | - | - | - | 0.4 | - | 9 | 0.4 |
| Functional Monomar (D) | Kind | D1 | D1 | D1 | D1 | D1 | D1 | D1 | D1 | D1 | D1 | D1 | D1 | D1 |
| | Amount, part by wt. | 1.0 | 0.25 | 0.25 | 1.0 | 0.1 | 1.0 | 1.0 | 0.25 | 0.25 | 35 | 1.0 | 0.1 | 1.0 |
| Oil Amount, part by wt. | | - | - | 20 | - | - | - | - | - | 20 | 20 | - | - | - |
| Radical Forming Agent (E) | | | | | | | | | | | | | | |
| | Amount, part by wt. | - | - | - | - | - | 0.03 | - | 0.4 | 0.4 | 0.4 | 0.4 | 0.01 | 6 |
| Evaluation Item | | | | | | | | | | | | | | |
| Melt Flow Rate | g/10 min | 11 | 10 | 12 | 9 | - | 3 | 8 | 3 | 10 | 10 | 12 | - | 100 |
| Flexural Modulus | $Kg/cm^2$ | 4,300 | 11,000 | 1,900 | 5,200 | 21,000 | 2,900 | 4,400 | 11,000 | 1,900 | 1,900 | 5,200 | 23,000 | 1,900 |
| Izod Impact Strength (-40 ° C) | $Kg \cdot cm/cm^2$ | N.B*1 | 4.0 | N.B. | 5.8 | 2.0 | N.B | N.B | 4.0 | N.B | N.B | 5,8 | 2.0 | 7.2 |
| Coating Adhesion | % | 100 | 100 | 100 | 100 | 100 | 100 | o | 100 | 100 | 100 | 100 | 100 | 100 |
| Coating Peeling Strength | g/10 mm | 1300 | 300 | 1100 | 200 | 200 | 1300 | <50 | 350 | 1200 | 1200 | 1100 | 200 | 100 |
| Flow Mark | visual evaluation | ○ | ◎ | Δ | ○ | - | Δ | ○ | × | × | × | × | - | × |
| Remarks | | | | | | | | not adhered | | | discolored | | | |

*1 N.B : non break

Table 2

| Starting Resin | | Example 7 | Example 8 | Example 9 | Example 10 | Example 11 | Comparative Example 8 | Comparative Example 9 | Comparative Example 10 | Comparative Example 11 | Comparative Example 12 |
|---|---|---|---|---|---|---|---|---|---|---|---|
| PP(A1) | wt% | - | - | - | - | 55 | - | - | - | - | 55 |
| PP(A2) | wt% | - | - | - | 40 | - | - | - | - | 40 | - |
| VLDPE(A4) | wt% | - | 100 | - | 60 | 15 | - | 100 | - | 60 | 15 |
| PBT(A7) | wt% | 100 | - | - | - | - | 100 | - | - | - | - |
| EPR(B1) | wt% | - | - | 100 | - | - | - | - | 100 | - | - |
| EPDM(B2) | wt% | - | - | - | - | 30 | - | - | - | - | 30 |
| Modifying Agenti(C) | Kind | c3-2 | c3-3 | c2-2 | c1-2 | c3-1 | - | - | - | c1-2 | c3-1 |
| Amount, part by wt. | | 1.2 | 4.0 | 0.4 | 1.2 | 0.4 | - | - | - | 1.2 | 0.4 |
| Functional Monomar (D) | Kind | D2-1 | D2-2 | D2-1 | D2-2 | D2-1 | D2-1 | D2-2 | D2-1 | D2-2 | D2-1 |
| Amount, part by wt. | | 1.0 | 3.0 | 0.3 | 0.8 | 2.0 | 1.0 | 3.0 | 0.3 | 35 | 2.0 |
| Oil Amount, part by wt. | | - | - | - | - | 20 | - | - | - | - | 20 |
| Radical Forming Agent (E) | | | | | | | | | | | |
| Amount, part by wt. | | - | - | - | - | 0.01 | 0.8 | 0.9 | - | - | 8.0 |
| Evaluation Item | | | | | | | | | | | |
| Melt Flow Rate | g/10 min | 1.0 | 3.0 | - | 3.0 | 6.0 | <0.01 | <0.01 | - | 1.0 | 60 |
| Flexural Modulus | $Kg/cm^2$ | 2,500 | 1,500 | 29,500 | 4,000 | 3,200 | 2,600 | 1,400 | 29,500 | 4,200 | 2,900 |
| Izod Impact Strength (-40 °C) | $Kg \cdot cm/cm^2$ | - | - | 2.0 | 7.9 | 11 | - | - | - | 6.8 | 6.0 |
| Coating Adhesion | % | 100 | 100 | 100 | 100 | 100 | 100 | 100 | 0 | 100 | 100 |
| Flow Mark | visual evaluation | - | - | - | ○ | ○ | - | - | - | × | × |
| Remarks | | | | | | | poor fluidity | poor fluidity | coating not closely adhered | discolored | molecule cut |

Table 3

| | | | Bmpded Material | |
|---|---|---|---|---|
| | | | Bonding Strength (g/cm) | |
| | Resin Composition (wt%) | | PBT (A7) | EVOH (A8) |
| Example 12 | A5 : LDPE | (40) | 2000 | 1600 |
| | Modified A5: Oxazoline modified LDPE (Ex.7) | (60) | | |
| Com. Example 13 | A5 : LDPE | (100) | 0 | 0 |
| Example 13 | A5 : LDPE | (80) | 3500 | 3400 |
| | Modified A5: Oxazoline modified PSt (Ex.9) | (20) | | |
| Com. Example 14 | A5 : LDPE | (80) | 0 | 0 |
| | A6 : PSt | (20) | | |
| Example 14 | A5 : LDPE | (60) | 3200 | 2100 |
| | Modified A4: Oxazoline modified VLDPE (Ex.8) | (40) | | |
| Com. Example 15 | A5 : LDPE | (60) | 0 | 0 |
| | A4 : VLDPE | (40) | | |
| Example 15 | A5 : LDPE | (10) | 1500 | 1000 |
| | Modified A1(40) + B2(60): Maleic Anhydride modified PP + EPDM (Ex.6) | (90) | | |
| Com. Example 16 | A5 : LDPE | (10) | | |
| | A1 : PP(40) + B2:EPDM(60) | (90) | 0 | 0 |

Table 4

| Stanting Resin | | Example | | | | Comparative Example | | | |
|---|---|---|---|---|---|---|---|---|---|
| | | 16 | 17 | 18 | 19 | 17 | 18 | 19 | 20 |
| PP(A3)<br>EPDM(B2) | wt%<br>wt% | 40<br>60 | 40<br>60 | 40<br>60 | 40<br>60 | 40<br>60 | 40<br>60 | 40<br>60 | 40<br>60 |
| Modifying Agent, Kind | | c2-1 | c3-1 | c1-2 | c4 | - | - | - | - |
| Amount, part by wt. | | 1.0 | 1.0 | 2.0 | 1.0 | - | - | - | - |
| Functional Monomer, Kind | | 1.0 | - | - | - | 1.0 | - | - | - |
| (D3) GMA Amount, part by wt. | | - | 1.5 | - | - | - | 1.5 | - | - |
| (D4) HDEA Amount, paert by wt. | | - | - | - | 2.0 | - | - | 2.0 | - |
| (D5) AEA Amount, part by wt. | | - | - | - | - | 2.0 | - | - | 2.0 |
| (D6) AN Amount, part by wt. | | - | | - | - | - | 0.03 | - | 0.4 |
| Evaluation Item | | 100 | 100 | 100 | 1-<br>00 | 0 | 0 | 0 | 0 |
| Coating Adhesion | % | | | | | | | | |
| Note) | | | | | | | | | |

D3; GMA : glycidyl methacrylate
D4; HDEA : hydroxyethyl acrylate
D5; AEA : aminoethyl acrylate
D6; AN : acrylonitrile

Table 5

| Resin Composition | | | Example 20 | Example 21 | Example 22 | Example 23 | Example 24 | Comparative Example 21 | Comparative Example 22 | Comparative Example 23 | Comparative Example 24 | Comparative Example 25 |
|---|---|---|---|---|---|---|---|---|---|---|---|---|
| PSt | (A6) | wt% | 30 | 54 | – | – | – | 42 | 54 | – | – | – |
| PPO | (A9) | " | 42 | – | 45 | – | 30 | 42 | – | 45 | – | 30 |
| PA | (A11) | | – | 36 | – | 75 | 60 | – | 36 | – | 75 | 60 |
| PET | (A12) | " | – | – | 45 | – | – | – | – | 45 | – | – |
| PC | (A13) | " | – | – | – | 15 | – | – | – | – | 15 | – |
| LDPE | (A5) | " | – | – | – | – | – | – | 10 | 10 | 10 | – |
| VLDPE | (A4) | " | – | – | – | – | – | – | – | – | – | 10 |
| EEA | (A10) | " | 16 | – | – | – | – | 16 | – | – | – | – |
| AMN-LDPE | (MAn:A5) | " | – | 10 | 10 | 10 | – | – | – | – | – | – |
| Oxa-PSt | (OXa:A6) | " | 12 | – | – | – | – | – | – | – | – | – |
| GMA-VLDPE | (GMA:A4) | " | – | – | – | – | 10 | – | – | – | – | – |
| **Evaluation Item** | | | | | | | | | | | | |
| Izods Impact Strength (23°C) | | $Kg \cdot cm/cm^3$ | 20 | – | – | 2.3 | 4.9 | 11 | – | – | 1.1 | 3.7 |
| Charpy Impact Strength (23°C) | | | – | 7.3 | 8.4 | – | – | – | 2.6 | 3.0 | – | – |

Note)

MAn-LDPE(MAn : A5) : maleic anhydride-modified low-density polyethylene

Oxa-PSt(Oxa : A6) : oxazoline-modified polystyrene

GMA-VLDPE(GMA : A4) : glycidyl methacrylate-modified ultra-low density polyethylene

## Claims

1. A modified thermoplastic resin composition comprising a graft-modified substance prepared by treating a thermoplastic resin (A) and/or a rubbery substance (B) with at least one kind of a monomer (D) containing at least one functional group selected from the following (D1) to (D6) in the presence of at least one compound as a modifying agent (C) selected from the following (C1) to (C4):

C1: a dihydroaromatic compound or a polymer thereof
C2: an ether compound
C3: a tetrahydroaromatic compound
C4: a cyclopentane compound
D1: carbonyl group
D2: cyclic iminoether group
D3: epoxy group
D4: hydroxyl group
D5: amino group
D6: nitrile group

2. A modified thermoplastic resin composition as set forth in claim 1, wherein the amount of the modifying agent (C) is in the range of 0.001 to 8 parts by weight based on 100 parts by weight of the thermoplastic resin (A) and/or the rubbery substance (B).

3. A modified thermoplastic resin composition as set forth in claim 1 or claim 2, wherein the amount of the functional group-containing monomer (D) is in the range of 0.01 to 30 parts by weight based on 100 parts by weight of the thermoplastic resin (A) and/or the rubbery substance (B).

4. A modified thermoplastic resin composition as set forth in any of claims 1 to 3, wherein a radical forming agent (E) is used in an amount of not more than 5 parts by weight together with the modifying agent (C).

5. A modified thermoplastic resin composition as set forth in any of claims 1 to 4, wherein the thermoplastic resin comprises a polyolefin resin and/or a polystyrene resin.

6. A modified thermoplastic resin composition as set forth in any of claims 1 to 5, wherein the polyolefin resin is an $\alpha$-olefin (co)polymer having two to twelve carbon atoms.

7. A modified thermoplastic resin composition as set forth in claim 6, wherein the a-olefin having two to twelve carbon atoms comprises an ethylene (co)polymer and/or a propylene (co)polymer.

8. A modified thermoplastic resin composition as set forth in any of claims 1 to 7, wherein the rubbery substance comprises an ethylene-propylene random copolymer rubber and/or an ethylene-propylene-diene random copolymer rubber.

9. A modified thermoplastic resin composition as set forth in any of claims 1 to 8, wherein the dihydroaromatic compound (C1) is a 1,2-dihydroquinoline compound or a polymer thereof, or 9,10-dihydrophenanthrene; the ether compound (C2) is dihydropyran or isopropenyl acetate; the tetrahydroaromatic compound is 1,2,3,4-tetrahydronaphthalene, tetrahydrobenzene, or tetrahydrofuran; and the cyclopentane series compound is indene.

10. A modified thermoplastic resin composition as set forth in any of claims 1 to 9, wherein the monomer containing carbonyl group D1 is maleic anhydride.

11. A modified thermoplastic resin composition as set forth in any of claims 1 to 9, wherein the monomer containing cyclic iminoether group D2 is 2-vinyl or 2-isopropenyl-2-oxazoline, or a derivative thereof.

12. A process for preparing a graft-modified substance or a modified thermoplastic resin composition comprising said graft-modified substance, which process comprises treating a thermoplastic resin (A) and/or a rubbery substance (B) with at least one kind of a monomer (D) containing at least one functional group selected from the following (D1) to (D6) in the presence of at least one compound as a modifying agent (C) selected from the following (C1) to (C4), at a temperature not lower than the melting point softening point of said resin or said rubber:

C1: a dihydroaromatic compound or a polymer thereof
C2: an ether compound
C3: a tetrahydroaromatic compound
C4: a cyclopentane compound
D1: carbonyl group
D2: cyclic iminoether group
D3: epoxy group
D4: hydroxyl group
D5: amino group
D6: nitrile group

13. A thermoplastic resin composition comprising 100 parts by weight of at least one kind of an engineering plastic and 1-100 parts by weight of the modified thermoplastic resin composition of claim 1.

14. A thermoplastic resin composition as set forth in claim 13, wherein said engineering plastic is selected from the group consisting of ultra-high molecular weight polyethylenes, polypropylenes, poly-1-butene, poly-4-methyl-1-pentene, polystyrene resins such as polystyrene, styrene/acrylonitrile copolymer, styrene/methyl methacrylate/acrylonitrile copolymer, α-methylstyrene/styrene/acrylonitrile copolymer, ABS (acrylonitrile/butadiene/styrene copolymer),MBS (methyl methacrylate/butadiene/styrene copolymer), AES (acrylonitrile/EPR/styrene copolymer), and AAS (acryl rubber/acrylonitrile/styrene copolymer), polymethacrylate resins, polyacetal resins, polyamide resins, polycarbonate resins, polyphenylene ether resins, polyester resins, liquid crystal polyester resins, polysulfone resins, polyether sulfone resins, polyphenylene sulfide resins, polyether-ether ketones, polyacrylate resins, polyamide-imide resins, polyimide resins, polyetherimide, polyesteramide, polyetheresteramide, polyetherketoneketone, polyaryletherlsetone, polyetherketone, and fluoro resins.